# EUROPEAN PATENT SPECIFICATION

(11) **EP 1 565 683 B1**
(45) Date of publication and mention of the grant of the patent: **29.08.2007**
(21) Application number: 03778514.4
(22) Date of filing: 25.11.2003
(51) Int. Cl.: F16L 15/06

(54) **IMPROVED CASING JOINTS**
VERBESSERTE GEHAÜSEVERBINDUNG
RACCORDS AMELIORES POUR TUBAGES

(30) Priority: 27.11.2002 GB 0227603
(43) Date of publication of application: 24.08.2005
(73) Proprietor: HSC S.A.L., Beirut (LB)
(72) Inventor: HIGNETT, Ian Harold, Great Yarmouth, Norfolk NR30 3PD (GB)
(74) Representative: Harrison, Paul Richard
(86) International application number: PCT/GB2003/005129
(87) International publication number: WO 2004/048834

(56) References cited:
- US-A- 3 870 351
- US-A- 4 623 173
- US-A- 4 732 416
- US-A- 4 770 444

## Description

### Field of the Invention

The present invention relates to a pipe joint particularly for use in connecting pipes which are required for use underground, for example in the oil and gas industry. The joint is especially designed where the pipe is likely to be subject to non-uniform forces perpendicular to the axis of the pipe.

### Background to the Invention

When transporting a fluid, such as oil or natural gas between two locations, the most cost effective methods utilise, where possible, pipelines. Such pipelines are normally constructed from individual pipes joined together. It is also usual for the pipeline carrying the fluid to be retained within a further pipeline, often referred to as a casing. The casing serves to protect the carrier pipeline and to enable the carrier pipeline to be positioned easily. The casing can also act as a safety barrier in the event of leakage of fluid from the carrier pipeline, as the leaking fluid is retained within the casing and is prevented from coming into contact with the immediate environment. For this reason, the casing must also possess resistance to the fluids and the pressures to which the carrier pipelines are subjected.

The regions where the pipes join, constitute discontinuities in both the inner and outer surface of the pipeline and as such are sources of weakness within the finished pipeline. It is important that any such weakness is minimised as much as possible, as any loss of fluid from the pipe is both wasteful of resources and potentially disastrous for the environment. Furthermore, the fluid lost can also increase the risk to personnel from fire or explosion. Replacement of inefficient or leaking joints is not always easy. Particularly in the case of the oil and gas industry, pipelines are situated quite often in relatively inaccessible locations and replacement is difficult and expensive.

Joints between pipes, which make up the carrier pipeline or the casing are commonly effected by using a screw-threaded joint, with each individual pipe having a thread complementary to that of the adjacent pipe. Such joints should be capable of resisting large differentials in pressure between the inside and the outside of the pipe. They must also, moreover, be able to remain fluid tight when the pipeline formed by the individual straight pipe is formed into a curved shape or deviates slightly from a linear configuration due to rock formations or the like.

Conventional pipes tend to function poorly when such bending forces are applied with the result that the performance of the pipeline is weakened and there is a risk of leakage where such bends occur.

It is an object of present invention to provide a pipe joint, which addresses the above problems and performs well when pipes being joined are not co-axial. In the description the terms casing and pipe can be used interchangeably, casing often denoting merely a larger diameter tube than that referred to as a pipe.

A generic pipe joint is known from US-A-3 870 351.

### Summary of the Invention

According to the invention there is provided a screw-threaded joint for pipes comprising a pin having at one end a male screw-threaded portion and a box having at one end a female portion having a complementary screw-thread, the portions being adapted to inter-cngage along the greater part of the axial length of the threaded portions the screw threads thereof being inclined in the same direction and at an acute angle to the longitudinal axis of the pipe length, the male thread extending to a tapered male stop shoulder adjacent a complementary stop shoulder on the female portion, the tapered male stop shoulder including a first conic surface substantially parallel to the axis of the pipe, the complementary stop shoulder comprising a recess in the form of a cone receiver having a rounded apex, and also comprising a first conic surface, substantially parallel to the axis of the pipe, wherein the first conic surface of the female portion includes one or more convex portions and a flat portion on said first conic surface. The curved portions cause a stronger seal to be formed which resists separation of the male portion from the female portion and gives increased performance of the joint on bending.

The surface of the or each curved portion preferably lies on the circumference of a circle, Advantageously the radius of the circle is from 2-10.5cm, and particularly advantageously from 23 - 3.05 cm (0.9"-1.2").

Preferably the distal end of the inner surface of the pin is chamfered, the chamfered edge being at of an angle of 18°-25° to the axis of the pin. The chamfered edge enables the main body of the pipe to be thicker and therefore stronger but maintains a smooth surface around the joint region to reduce turbulence induced in the flow of fluid material.

The flat portion of the conic surface advantageously subtends an angle of from 1°-15° with the pipe axis and particularly advantageously an angle of 1.5°- 4°. The shallower angle provides that the pipe is thicker and therefore stiffer increasing the joints resistance to opening.

Preferably, the second conic surface of the stop shoulder subtends an angle of 11° - 20° with the plane perpendicular to the axis of the pipe and particularly preferably an angle of 11°-13°.

### Brief Description of the Drawings

The invention will now be described with reference to the accompanying drawings which show by way of example only, one embodiment of a casing joint. In the drawings:
Figure 1 is a sectional view through the stop-shoulder of a pin;
Figure 2 is the sectional view through the stop-shoulder of a corresponding box;
Figures 3a-3c illustrate distribution of stress within a stop shoulder;
Figures 4a-4c illustrate plastic strain distribution arising from stress shown in Figures 3a-3c; and
Figures 5a-5c are simulations of the stability of a pipe joint which is subject to bending forces and pressure differentials.

### Detailed Description of the Invention

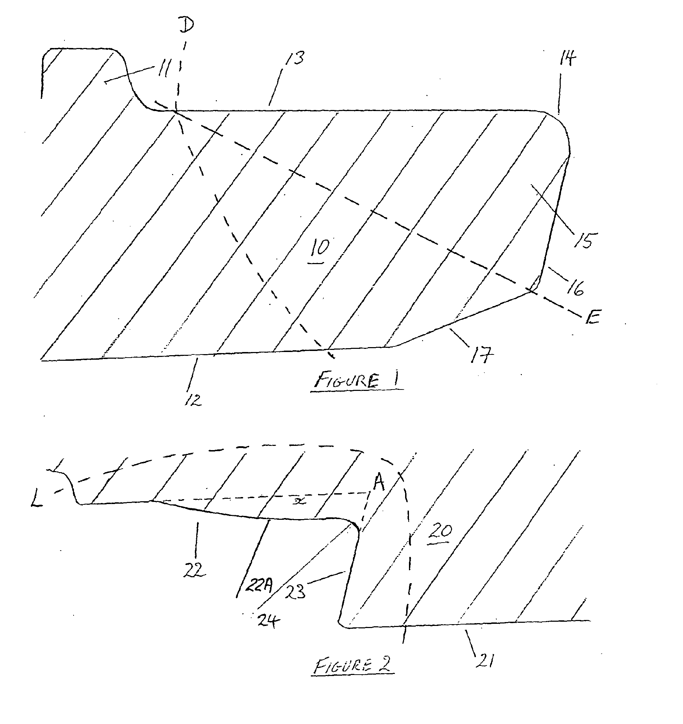

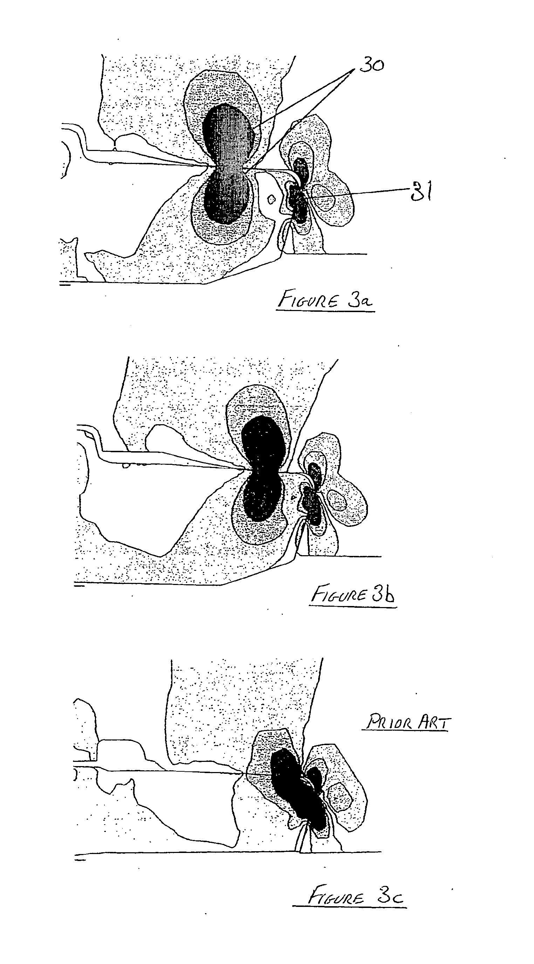

Figure 1 shows a stop-shoulder 15 of a pin 10, or male section, of a connection for a pipe or casing joint. In the pin 10, the final crest 11 of the screw-thread is shown. The pin 10 has an inner surface 12 which, when the pin 10 is connected to a corresponding box 20, or female section, (Figure 2) forms part of the inside of the pipeline. The female section and the male section have screw threaded portions (not illustrated) along the greater part of their axial length. These screw threaded portions are inclined in the same direction and are at an acute angle to the longitudinal axis of the pipe length. In use, on application of torque the two screw threaded portions inter-engage to form a joint and hold the male and female sections together.

An outer surface 13 has a substantially straight cross-section tapering slightly away, at an angle of approximately 2°, from the crest 11 towards the apex 14 of the stop-shoulder 15. The outer surface 13 engages a corresponding surface 22 of a box to form a sealing surface when the two pipes are screwed together.

Due to the features described below the taper of the surface 13 is only 2° from the axis of the pipe. This enables the distal end of the pin 10 to be stronger than would otherwise be the case in conventional pipes. Therefore, pressure from outside the pipe which penetrates between the threads of the male and female part of the pipe joint and which tends to push these two parts apart is resisted due to the stiffening effect on the pin 10. Angles which can be used within the present invention are 1°-15° and particularly 1.5°-4°.

The stop-shoulder 15 has a further sealing surface 16 to engage a corresponding surface on the box 20 and so form a further seal to prevent fluid escaping through the joint. The sealing surface 16 is connected to the outer surface 13 by the curved apex 14. The sealing surface 16 is at an angle of 12" to a plane perpendicular to the main axis of the pin 10. The stop shoulder 15 has therefore a conical portion defined by the surfaces 13, 14 and 16 with the base of the conical portion substantially along the dotted line E on Figure 1. Due to the improved sealing characteristics of the joint, the angle which this surface subtends with the plane is shallower than in conventional joints. As such, the angle subtended can be from 11°-20°.

The pin 10 of Figure 1 engages a complementary box section on the pipe section to which it is being joined. The box 20 has an inner surface 21, which together with the surfaces 12,17 forms the inside surface of a pipeline when the pipes are joined together. The box 20 has a number of further surfaces 22,23, which together form a stop-shoulder having a recess (included within the section, bounded by the dotted line G in Figure 2) complementary in shape to that of the stop-shoulder 15 of the pin 10 and which engage the pin 10 to form a number of sealing surfaces. The recess formed has a substantially conical cross-section with a rounded apex 24. The longitudinal sealing surface engages the corresponding longitudinal sealing surface. The surface 22 (on the box) includes a convex portion 22A. The convex portion 22A provides a redistribution of forces within the pipe sections when the pin 10 and the box 20 are screwed together.

When torque is applied to the two pipes to screw them together the convex surface causes strain induced within the stop-shoulder to be distributed such that the strain is primarily concentrated in the area around the convex portion 22A. The strain therefore is distributed to areas of higher strength within the pin 10 and the box 20 and the stress produced therein therefore causes less damage.

The cross-sectional surface of the convex portion 22A lies on a circle having a radius of approximately 2.5 cms, although radii of from 2-10.5 cms have been found to be acceptable.

In addition, the pin 10 includes a chamfered surface 17 connecting the surfaces 12 and 16. The chamfered surface 17, in use, would be forced in a direction towards the centre of the pipe being formed. The deformation would be sufficient to result in the resulting surface formed by surfaces 12,17 and 21 on the inside of the resultant pipe being smooth.

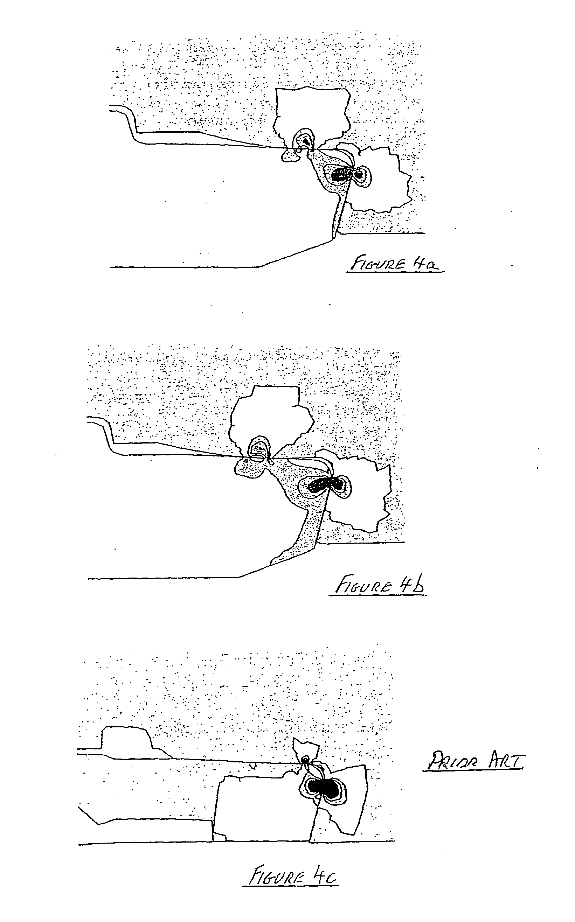

Figures 3a to c show the calculated strain induced in the stop-shoulder region of a joint. In these Figures, a darker shading indicates that that particular region is under a greater strain. The centre of the convex portion lies has co-ordinates of-0.165cm, 22.05cm and that of the surface in Figure 3b, (-0.292cm, 22.05cm). In these co-ordinates the x axis refers to the axis x shown in Figure 2, with reference to the imaginary point A. The y co-ordinate is reckoned from the centre of the pipe.

The box section of the joints shown in Figures 3a and 3b include a convex surface of radius 2.5cm. Two primary differences can be seen in distribution of the stress between the two joints according to the invention and the prior art joint of Figure 3c. Firstly, the main stress in the joints having the convex portion is located in the two areas, the first being around the sealing edges 31. The second region is then two lobes 30, one on either section of pipe a substantial distance away from the sealing surface.

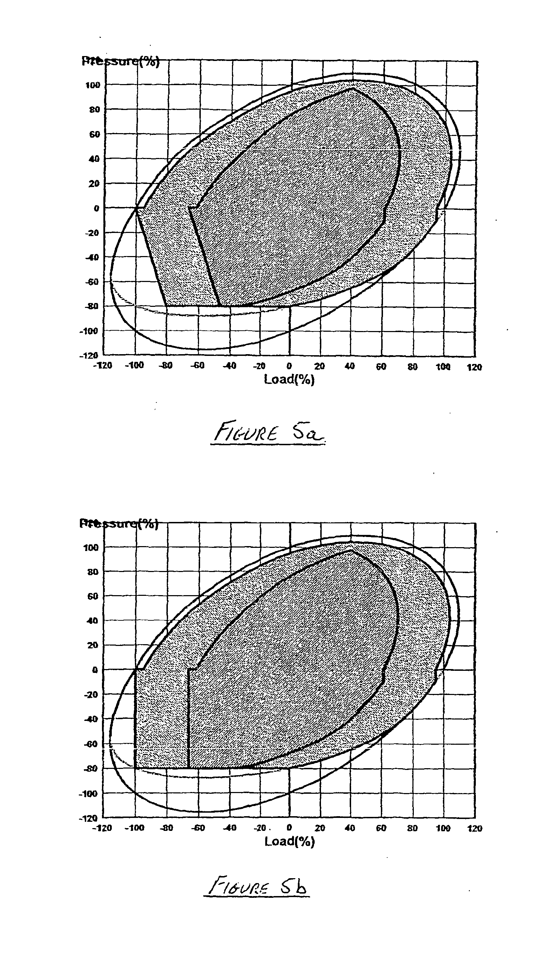

The lobes 30 can be seen to project radially into the body of the pin and the box members. This results in a seal which is stronger than with conventional joints with regard to resistance to bending forces. The effect of this is shown in the joint as a result of applied torque. Again, as with Figures 3a-3c, the darker areas denote regions of high flow. In the prior art joint of Figure 4c the plastic flow can be seen to be primarily in the region 45 of the sealing surfaces 16 and 23 with a small amount 46 on the flat surface 13, relatively close to the curved apex 14.

This plastic flow leads to a significant weakening of the seal produced by these surfaces 16, 23.

Moreover, the seal along this axis acts to prevent external pressure, coming down the thread, from forcing the two stop shoulders apart and so breaking the seal.

In contrast, the plastic flow induced in the corresponding regions 42, 44 of the joints shown in Figures 4a and 4b respectively is smaller in these regions with a corresponding reduction in damage to the seal formed by these sealing surfaces. Furthermore, although a small amount of plastic flow is shown in the regions which from Figures3a and 3b are seen to under a great deal of strain, the flow is relatively small indicating a strong seal is maintained.

Without being limited to a specific theory, a further reason the convex portion improves the strength of a joint and its resistance to weakening on bending is as follows. It is believed that the surface causes strain, resulting from the coupling of two pipe joints, to be concentrated in a region of the joint away from the sealing surface 16,23. The concentration essentially, of stored energy gives a very strong seal and that this energy is concentrated in a relatively strong section of pipe which is resistant to plastic flow.

Although the convex surface 22 is illustrated having a surface lying on the circumference of a circle, it can also have the form of a number of other curved surfaces such as an ellipse describing a curve having a generalised formula a x²/a² + y²/b² = 1. The surface can also be formed having no planar section 24 in which case the surface between the apex 14 and the foot of the crest 11 is purely convex.

Alternatively, the surface 13 between the apex 14 and the foot of the crest 11 can include more than one convex surface which may or may not have a substantially planar section between them.

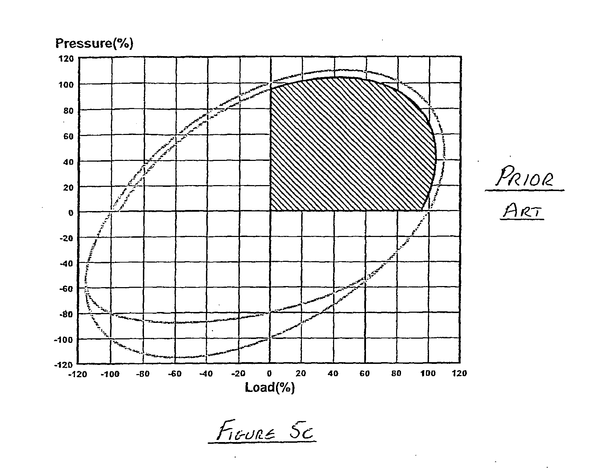

The improved performance of seals incorporating a curved sealing surface is shown in Figures 5a to 5c, the seals shown in these figures corresponding to those of Figures 3a to 3c. These figures show the simulated response of particular pipe joints to pressure differential between the interior and the exterior of the pipe and to the pipe being bent. The shaded areas correspond to combinations of bending and pressure differential where the joint is stable. The inner, darker areas correspond to pipe joints in which the axis of the individual pipes joined together are already not co-axial. As can be seen from Figures 5a and 5b, the stable regions extend over a large range of lobes and differential pressures. These results are in comparison with the response of the prior art pipe joint shown in Figure 5c which is stable in only a restricted range, in the first quadrant of the graph.

The chamfered surface can include a concave portion along at least a section of its length to provide a smoother join and reduce turbulent flow within the fluid flowing through the pipe.

It will of course be understood that the invention is not limited to the specific details described herein, which are given by way of example only, and that various modifications and alterations are possible within the scope of the appended claims.

## Claims

1. A screw-threaded joint for pipes comprising a pin (10) having at one end a male screw-threaded portion and a box (20) having at one end a female portion having a complementary screw-thread, the portions being adapted to inter-engage along the greater part of the axial length of the threaded portions the screw threads thereof being inclined in the same direction and at an acute angle to the longitudinal axis of the pipe length, the male thread extending to a tapered male stop shoulder (15) adjacent a complementary stop shoulder on the female portion, the tapered male stop shoulder (15) including a first conic surface (13) substantially parallel to the axis of the pipe, the complementary stop shoulder comprising a recess in the form of a cone receiver having a rounded apex (24), and also comprising a first conic surface (22), substantially parallel to the axis of the pipe, **characterised in that** the first conic surface (22) of the female portion includes one or more convex portions (22A) and a flat portion on said first conic surface (22).

2. A joint according to Claim 1, wherein the surface of the or each curved portion lies on the circumference of a circle.

3. A joint according to Claim 2, wherein the radius of the circle is from 2-10.5cm.

4. A joint according to Claim 3, wherein the radius of the circle is from 2.2cm to 4cm.

5. A joint according to any preceding claim, wherein the distal end (17) of the inner surface of the pin is chamfered, the chamfered edge being at an angle of 18°-25° to the longitudinal axis of the pin.

6. A joint according to any preceding Claim, wherein said flat portion of the first conic surface subtends an angle of from 1°-15° with the longitudinal axis of the pipe.

7. A joint according to Claim 6, wherein the flat portion subtends an angle of 1.5°-4°.

8. A joint according to any preceding claim, wherein a second conic surface (16) of the stop shoulder subtends an angle of 11" - 20° with the plane perpendicular to the longitudinal axis of the pipe.

9. A joint according to Claim 8, wherein the second conic surface subtends an angle of 11°-13°.

## Patentansprüche

1. Gewindeverbindung für Rohre, die einen Zapfen (10) mit einem Außengewindeabschnitt an einem Ende und eine Fassung (20) mit einem Aufnahmeabschnitt mit komplementärem Gewinde umfasst, wobei die Abschnitte so gestaltet sind, dass sie entlang dem größeren Teil der axialen Länge der Gewindeabschnitte ineinandergreifen, wobei ihre Gewinde in derselben Richtung und in einem spitzen Winkel zur Längsachse der Rohrlänge geneigt sind, wobei das Außengewinde zu einer konisch zulaufenden Steckanschlagschulter (15) neben einer komplementären Anschlagschulter am Aufnahmeabschnitt verläuft, wobei die konisch zulaufende Steckanschlagschulter (15) eine erste konische Fläche (13) im Wesentlichen parallel zur Achse des Rohres aufweist, wobei die komplementäre Anschlagschulter eine Aussparung in Form eines Konussitzes mit einem abgerundeten Scheitel (24) sowie eine erste konische Fläche (22) im Wesentlichen parallel zur Achse des Rohres umfasst, **dadurch gekennzeichnet, dass** die erste konische Fläche (22) des Aufnahmeabschnitts einen oder mehrere konvexe Abschnitte (22A) und einen flachen Abschnitt an der genannten ersten konischen Fläche (22) aufweist.

2. Verbindung nach Anspruch 1, wobei die Oberfläche des oder jedes gekrümmten Abschnits auf dem Umfang eines Kreises liegt.

3. Verbindung nach Anspruch 2, wobei der Radius des Kreises 2 bis 10,5 cm beträgt.

4. Verbindung nach Anspruch 3, wobei der Radius des Kreises 2,2 cm bis 4 cm beträgt.

5. Verbindung nach einem der vorherigen Ansprüche, wobei das distale Ende (17) der Innenfläche des Zapfens abgeschrägt ist, wobei der abgeschrägte Rand einen Winkel von 18°-25° zur Längsachse des Zapfens bildet.

6. Verbindung nach einem der vorherigen Ansprüche, wobei der genannte flache Abschnitt der ersten konischen Fläche einen Winkel von 1-15° zur Längsachse des Rohres begrenzt.

7. Verbindung nach Anspruch 6, wobei der flache Abschnitt einen Winkel von 1,5°-4° begrenzt.

8. Verbindung nach einem der vorherigen Ansprüche, wobei eine zweite konische Fläche (16) der Anschlagschulter einen Winkel von 11°-20° zu der Ebene lotrecht zur Längsachse des Rohrs bildet.

9. Verbindung nach Anspruch 8, wobei die zweite konische Fläche einen Winkel von 11°-13° begrenzt.

## Revendications

1. Un raccord fileté pour tuyaux comprenant une goupille (10) ayant à une extrémité une portion filetée mâle et une boîte (20) ayant à une extrémité une portion femelle ayant un filetage complémentaire, les portions étant adaptées pour s'emboîter l'une avec l'autre le long de la plus grande partie de la longueur axiale des portion filetées, les filetages de ces dernières étant inclinés dans le même sens et à un angle aigu par rapport à l'axe longitudinal de la longueur de tuyau, le filetage mâle s'étendant jusqu'à un épaulement d'arrêt mâle conique (15) au droit d'un épaulement d'arrêt complémentaire sur la portion femelle, l'épaulement d'arrêt mâle conique (15) comportant une première surface conique (13) substantiellement parallèle à l'axe du tuyau, l'épaulement d'arrêt complémentaire comprenant un évidement sous la forme d'un récepteur de cône ayant un sommet arrondi (24), et comprenant également une première surface conique (22), substantiellement parallèle à l'axe du tuyau, **caractérisé en ce que** la première surface conique (22) de la portion femelle comporte une ou plusieurs portions convexes (22A) et une portion plate sur ladite première surface conique (22).

2. Un raccord conformément à la Revendication 1, dans quoi la surface de la ou de chaque portion courbe est située sur la circonférence d'un cercle.

3. Un raccord conformément à la Revendication 2, dans quoi le rayon du cercle est compris entre 2 et 10,5cm.

4. Un raccord conformément à la Revendication 3, dans quoi le rayon du cercle est compris entre 2,2 et 4cm.

5. Un raccord conformément à toute revendication précédente, dans quoi l'extrémité distale (17) de la surface intérieure de la goupille est chanfreinée, le bord chanfreiné étant à un angle compris entre 18 et 25° par rapport à l'axe longitudinal de la goupille.

6. Un raccord conformément à toute revendication précédente, dans quoi ladite portion plate de la première surface conique sous-tend un angle compris entre 1 et 15° par rapport à l'axe longitudinal du tuyau.

7. Un raccord conformément à la Revendication 6, dans quoi la portion plate sous-tend un angle compris entre 1,5 et 4°.

8. Un raccord conformément à toute revendication précédente, dans quoi une deuxième surface conique (16) de l'épaulement d'arrêt sous-tend un angle compris entre 11 et 20° avec le plan perpendiculaire à l'axe longitudinal du tuyau.

9. Un raccord conformément à la Revendication 8, dans quoi la deuxième surface conique sous-tend un angle compris entre 11 et 13°.
